# EUROPÄISCHE PATENTANMELDUNG

(11) **EP 1 112 974 A2**
(43) Veröffentlichungstag der Anmeldung: **04.07.2001**
(21) Anmeldenummer: 00119871.2
(22) Anmeldetag: 13.09.2000
(51) Int. Cl.: C03B 33/02, C03B 33/04, C03B 33/10, C03B 33/023, C03B 27/00

(54) **Verfahren zum Herstellen vorgespannter oder gebogener Gläser**

(30) Priorität: 30.12.1999 DE 19963865
(71) Anmelder: Schott Desag AG, 31073 Grünenplan (DE)
(72) Erfinder: Schmidt, Thomas, 31073 Delligsen (DE); Elstermeier, Frank, 31073 Grünenplan (DE); Biethmann, Stefan, 31061 Alfeld (DE); Hermanns, Christoph, 55130 Mainz (DE); Schuster, Markus, 55126 Mainz (DE)
(74) Vertreter: Dr. Weitzel & Partner

(57) **Zusammenfassung**

Die Erfindung betrifft ein Verfahren zum Herstellen von vorgespannten und/oder gebogenen Gläsern.

Um eine Kantenbearbeitung mit anschließendem Waschen zu vermeiden, wird das Verfahren gemäß der Erfindung wie folgt durchgeführt:
es wird eine rohe Glastafel hergestellt;
die Glastafel wird auf das gewünschte Maß zugeschnitten;
das Zuschneiden erfolgt mittels eines Lasers;
nach dem Zuschneiden wird die Glastafel vorgespannt und/oder gebogen.

## Beschreibung

Die Erfindung betrifft vorgespannte oder gebogene Gläser, insbesondere Glasscheiben.

Bei vorgespannten Gläsern geht es zum Beispiel um Bauglasscheiben, Automobilverglasungen wie Windschutzscheiben, Einlegeböden für Kühlschränke, Sichtscheiben für Backöfen, Kalotten, Sanitärutensilien, Instrumentenabdeckungen, Spezial-Filtergläser und anderes mehr.

Gebogene Flachglasscheiben finden heute vielfältig Verwendung. Einige Anwendungen sind zum Beispiel Bauglasscheiben, Automobilverglasungen, Kalotten, Sanitärutensilien, Instrumentenabdeckungen und so weiter.

Der Prozeß des Herstellens von vorgespannten Gläsern beinhaltet die folgenden Verfahrensschritte:
Zunächst wird der Glaskörper, somit beispielsweise eine Glastafel, hergestellt. Üblich ist das Floatverfahren, doch können Glasscheiben auch auf andere Weise erzeugt werden, beispielsweise im Ziehprozeß oder im Gießprozeß.

Hieran schließt sich das Zuschneiden der Glastafeln auf das erforderliche Endmaß an. Im Anschluß an das Zuschneiden ist eine Bearbeitung der Kanten unerläßlich. Die Kanten weisen nämlich Unregelmäßigkeiten wie Mikrorisse auf. Bei Auftreten von Spannungen führen solche Unregelmäßigkeiten zu einem Ausbrechen von Glas im Kantenbereich oder gar zu einem Fortpflanzen der Mikrorisse durch die ganze Glasscheibe hindurch und damit zum Bruch. Deswegen ist es notwendig, die Kanten von Gläsern vor dem Vorspannen zu schleifen, um ein Ausbrechen oder Durchbrechen der Glasscheibe im Einsatz zu vermeiden.

An die Kantenbearbeitung muß sich im allgemeinen ein Waschprozeß anschließen, um Schleifreste oder Glaspartikel vor dem Vorspannprozeß zu beseitigen.

Das gesamte Verfahren ist zeitaufwendig und lohnkostenintensiv. Dies betrifft insbesondere die Kantenbearbeitung und die Waschbehandlung. Dabei führt die Kantenbearbeitung nicht immer zum gewünschten Ergebnis. Nach dem Zuschneiden der Glastafel auf das gewünschte Maß können nämlich verborgene Mikrorisse vorhanden sein, die sich relativ weit in die Glasfläche hinein erstrecken, ohne daß dies beim Kantenbearbeiten erkennbar ist.

Beim Herstellen gebogener Gläser werden derzeit die folgenden Verfahrensschritte angewandt:
- Bereitstellung der Gläser (üblicherweise) im Floatverfahren hergestellt; die Scheiben können aber auch in anderer Weise, zum Beispiel Ziehprozeß, Gießprozeß hergestellt werden)
- Zuschnitt der Glastafeln auf das geforderte Endmaß
- Kantenbearbeitung (Schleifprozeß, optional)
- Biegeprozeß
- Eventuell Vorspannprozeß (je nach Glasdicke und Anwendung ein thermischer oder ein chemischer Prozeß)

Der Sinn der Kantenbearbeitung liegt in einer Ausbeuteverbesserung beim Biegeprozeß zur Vermeidung von Bruch und Glassplitter. Wenn (was möglich ist) auf die Kantenbearbeitung verzichtet wird, ergibt sich dementsprechend ein erhöhter Ausschuß im Prozeß. Zusätzlich zu der erwähnten Kantenbearbeitung muß üblicherweise ein Waschprozeß zur Entfernung von Schleifresten und Glaspartikeln vor dem Biegeprozeß erfolgen.

Der Erfindung liegt die Aufgabe zugrunde, ein Verfahren zum Herstellen von gebogenen und/oder vorgespannten Glasscheiben anzugeben, bei dem die genannten Nachteile vermieden werden. Insbesondere soll erreicht werden, daß der Herstellungsprozeß vereinfacht und verbilligt wird, und daß außerdem die Gefahr des Ausbrechens oder des Fortpflanzens von Haarrissen vermieden wird. Das Verfahren soll in jedem Falle derart gestaltet werden, daß auf eine Kantenverarbeitung und auf einen Waschprozeß verzichtet werden kann.

Diese Aufgabe wird durch die Merkmale von Anspruch 1 gelöst.

Die Erfinder haben dabei folgendes erkannt:
Wird das Zuschneiden der Glastafel auf das gewünschte Endmaß mittels eines Lasers durchgeführt, so ergibt sich eine Kantenqualität, die bezüglich thermischer und mechanischer Belastbarkeit einwandfrei ist. Die Qualität ist gleich jener, die bei der konventionellen Randbearbeitung erzielt wird. Durch die Anwendung eines Lasers werden jegliche Haarrisse oder Mikro-Ausbrechungen aus dem Material vermieden. Es bedarf keinerlei Nachbearbeitung mehr. Das Schleifen der Kanten entfällt somit. Damit entfällt aber auch gleichzeitig die Notwendigkeit des Waschens. Die Einsparung an Zeit und Personalaufwand durch die Erfindung ist somit erheblich.

Je nach Stärke der zu schneidenden Glastafel kann es auch ausreichen, das gewünschte Maß der Glastafel durch Laserritzen und anschließendes Brechen der Glastafel zu erzielen. Versuche haben gezeigt, daß selbst hierbei eine einwandfreie Kantenqualität erzielt wird.

Das Anwenden von Lasern zum Schneiden von Materialien ist zwar bekannt. Jedoch war bei dem hier vorliegenden Schneiden von Glastafeln nicht zu erwarten, daß es ein Kanten-Nachbearbeiten und damit auch ein Waschen überflüssig macht. Ohne Erkenntnis dieses Sachverhaltes mußte der eingangs beschriebene konventionelle Prozeß als rationeller erscheinen.

Soll eine Glasscheibe vorgespannt werden, so wird sie mittels eines Lasers beziehungsweise nach dem Laserritzen und Durchpressen in üblicher Weise vorgespannt. Dabei durchläuft das Werkstück einen Durchlauf-Ofen oder einen Reversier-Ofen, und anschließend eine Quench-Einrichtung Hierbei wird in den Außenzonen eine Druckspannung, und im Innenbereich eine Zugspannung aufgebracht. Die Vorspannung hat bekanntlich den Sinn, die Festigkeit von Glasscheiben zu erhöhen und gleichzeitig bei einem Bruch zu einem Zerfallen der Glasscheibe zu feinen Krümeln zu führen.

Soll eine Glasscheibe gebogen werden, so wird sie mittels eines Lasers zuvor auf Format geschnitten. Eine Kantenbearbeitung mit dem zugehörenden Waschprozeß entfällt.

Gemäß der Erfindung hergestellte Glasscheiben - gebogen und/oder vorgespannt - weisen eine deutlich höhere Schnittkantenqualität und eine erhöhte Festigkeit auf. Gebogene Glasscheiben haben alle Vorteile von Glasscheiben, die nach bekannten Biegeverfahren hergestellt sind, ohne die Notwendigkeit einer Kantenbearbeitung.

Die Erfindung läßt sich auf jegliche Arten von Glaskörpern anwenden, zum Beispiel auf komplex gebogene Flachglasscheiben, plane Flachgläser und 3 D-Formen.

Die Reihenfolge der Verfahrensschritte "vorspannen" und "biegen" der Glasscheiben kann im einen oder anderen Sinne sein. Im allgemeinen wird das Biegen dem Vorspannen vorausgehen.

## Patentansprüche

1. Verfahren zum Herstellen von gebogenen und/oder vorgespannten Glasscheiben, mit den folgenden Merkmalen:
1.1 es wird eine rohe Glastafel hergestellt;
1.2 die Glastafel wird auf das gewünschte Maß zugeschnitten;
1.3 das Zuschneiden erfolgt mittels eines Lasers;
1.4 nach dem Zuschneiden wird die Glastafel gebogen und/oder vorgespannt.

2. Verfahren nach Anspruch 1, dadurch gekennzeichnet, daß zum Erzielen des gewünschten Maßes nur ein Laserritzen und ein anschließendes Durchbrechen vorgenommen wird.

3. Glasscheibe, hergestellt mittels eines Verfahrens nach den Ansprüchen 1 oder 2.
